**Europäisches Patentamt**

**European Patent Office**

**Office européen des brevets**

(11) Veröffentlichungsnummer: **0 027 951**
**A1**

(12) **EUROPÄISCHE PATENTANMELDUNG**

(21) Anmeldenummer: **80106246.4**

(22) Anmeldetag: **15.10.80**

(51) Int. Cl.³: **B 23 B 47/08**

(30) Priorität: **18.10.79 DE 2942102**

(43) Veröffentlichungstag der Anmeldung: **06.05.81**
**Patentblatt 81/18**

(84) Benannte Vertragsstaaten: **AT BE CH FR GB IT LI NL SE**

(71) Anmelder: **Wilhelm Henke GmbH & Co. KG, Schanzeweg 4-10, D-4990 Lübbecke 4 (DE)**

(72) Erfinder: **Henke, Wilhelm, Schanzeweg 10, D-4990 Lübbecke 4 (DE)**

(74) Vertreter: **Hoefer, Theodor, Dipl.-Ing., Kreuzstrasse 32, D-4800 Bielefeld (DE)**

(54) Bohrmaschine.

(57) Bei einer Bohrmaschine mit axial bewegbarer Bohrspindel (12) ist das Gehäuse eines druckluftangetriebenen Motors als Kreiskolben (10) ausgebildet. Der Kreiskolben (10) ist mit einem koaxial angeordnetem Luftzuführrohr (15) und einer auf diesem befestigten Kolbenmanschette (25) in einem Zylindergehäuse (11) verschiebbar gelagert. Zur Veränderung der Einbauhöhe der Bohrmaschine läßt sich durch wahlweise Beaufschlagung von einer der beiden Kolbenmanschettenseiten der Kreiskolben (10) mit der Bohrspindel (12) mehr oder weniger weit aus dem Zylindergehäuse (11) aus- bzw. einfahren.

**Patentanwalt**

# Dipl.-Ing. Th. Hoefer

6/3

0027951

4800 Bielefeld 1, den
Kreuzstraße 32
Telefon (05 21) 17 10 72 - Telex 9-32 449

Bankkonten: Commerzbank AG, Bielefeld 6 851 471 (BLZ 480 400 35)
Sparkasse Bielefeld 72 001 563 (BLZ 480 501 61)
Postscheckkonto: Amt Hannover 689 28-304

Zugelassener Vertreter beim Europäischen Patentamt
Prof. Representative before the European Patent Office
Mandataire agréé près l'Office européen des brevets

Diess.Akt.Z.: E 13

Wilhelm Henke GmbH & Co. KG, Schanze Weg 4 - 1o,
499o Lübbecke 4

Bohrmaschine

Die Erfindung betrifft eine Bohrmaschine mit einem die
Bohrspindel antreibenden Druckluftmotor.

Aufgabe der Erfindung ist es, eine Bohrmaschine zu

-2-

schaffen, deren Einbauhöhe wahlweise verändert werden kann. Insbesondere soll die Höhe des Druckluftmotors in Richtung der Spindelachse einschließlich seines Gehäuses möglichst gering werden.

Nach der Erfindung wird diese Aufgabe bei einer Bohrmaschine mit einem Druckluftmotor, dessen Rotor od. dgl. die Bohrspindel antreibt dadurch gelöst, daß das Gehäuse des Druckluftmotors als Kreiskolben ausgebildet und in einem Zylindergehäuse axial verschiebbar gelagert ist.

Eine derartige Ausbildung zeigt den Vorteil, daß die Einbauhöhe des Bohrwerkes wesentlich verkleinert werden kann.

Bevorzugt ist erfindungsgemäß an der in Bezug auf die Spindel rückseitigen Stirnseite des Kreiskolbens ein Luftzufuhrrohr koaxial angeordnet, wobei an der Verbindungsstelle von Kreiskolben und Luftzufuhrrohr bevorzugt eine an der inneren Oberfläche des Zylindergehäuses dicht anliegende und dessen Hohlraum unterteilende Kolbenmanschette befestigt sein kann, die zusätzlich bevorzugt zwischen einem Ansatzstück und einem an dem Luftzufuhrrohr ausgebildeten Klemmring festgeklemmt sein kann.

Bevorzugt ist im Zylindergehäuse auf beiden Seiten der Kolbenmanschette jeweils eine radiale Luftdurchtrittsöffnung angeordnet.

- 3 -

Spindelseitig kann der Kreiskolben mit Luftaustrittsöffnungen ausgestattet sein, so daß die ausblasende
Luft (Abluft) den Bereich der Spindel umstreicht.

Das Zylindergehäuse ist bevorzugt gemäß einem weiteren
Merkmal der Erfindung an seinen beiden Stirnseiten mit
Führungsbuchsen verschlossen, wobei in der vorderen
Führungsbuchse der Kreiskolben und in der hinteren
Führungsbuchse das Luftzufuhrrohr zentral gelagert sein
kann.

Der Schutzumfang der Erfindung erstreckt sich nicht nur
auf die beanspruchten Einzelmerkmale, sondern auch auf
deren Kombination.

- 4 -

Ein Ausführungsbeispiel der Erfindung ist in der Zeichnung dargestellt und wird im folgenden näher beschrieben. In der Zeichnung sind zwei Längsschnitte der Bohrmaschine dargestellt. Es zeigen:

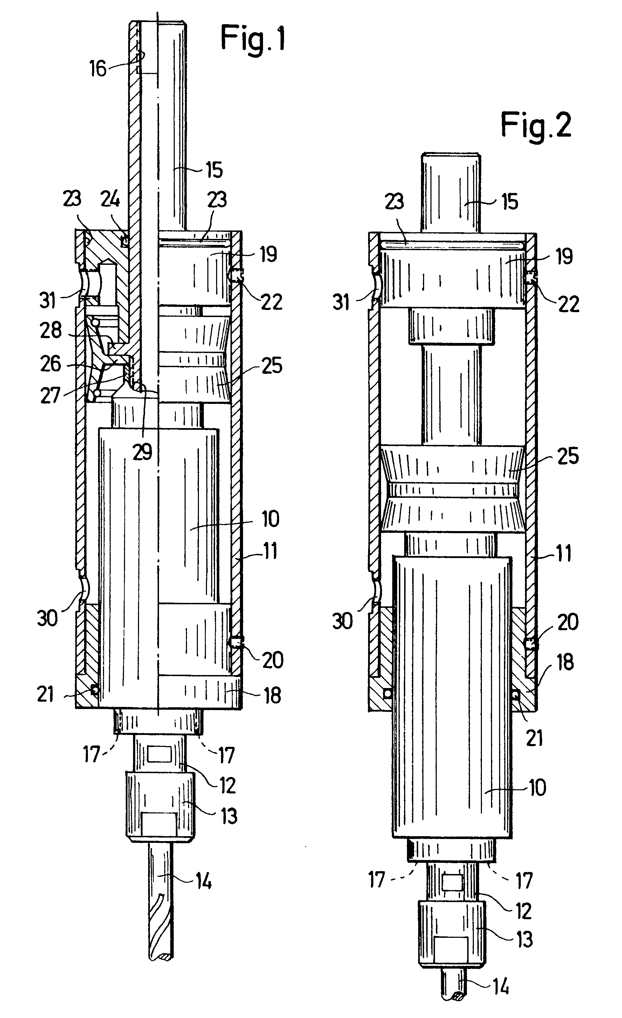

Fig. 1    eine am weitesten in das Zylindergehäuse eingefahrene Stellung des Kreiskolbens des Druckluftmotors;

Fig. 2    eine teilweise ausgefahrene Stellung des Kreiskolbens.

Die Bohrmaschine besitzt einen inneren Druckluftmotor in der äußeren Form eines Kreiskolbens 1o, der in einem Zylindergehäuse 11 in axialer Richtung verschiebbar gelagert ist. An der außerhalb des Zylindergehäuses 11 befindlichen Stirnfläche des Kreiskolbens 1o ragt aus diesem eine mit dem inneren an sich bekannten aber nicht dargestellten Rotor gekoppelten Spindel 12 heraus, die ein Futter 13 zum Einspannen eines Bohrers 14 trägt.

Die zum Antrieb des Rotors od. dgl. und damit zur Drehung der Spindel 12 erforderliche Druckluft wird dem Kreiskolben 1o durch ein Luftzufuhrrohr 15 zugeführt, welches an der in dem Zylindergehäuse 11 befindlichen Stirnseite des Kreiskolbens 1o mit einem Ende angrenzt. Das andere Ende des Luftzufuhrrohres 15 befindet sich außerhalb des Zylindergehäuses 11 und kann mit einem Innengewinde 16 versehen sein, um dort das Verbindungsstück eines Luftanschluß-

- 5 -

schlauches einschrauben zu können. Die nach dem Antreiben des Rotors entspannte Luft verläßt den Kreiskolben 1o an Austrittsöffnungen 17, die sich im Bereich der äußeren Stirnfläche des Kreiskolbens 1o befinden, so daß diese ausblasende Druckluft den Bereich der Spindel 12 vorteilhaft umstreicht.

Die Lagerun g von Kreiskolben 1o und Luftzufuhrrohr 15 in dem Zylindergehäuse 11 ist mit Hilfe von Führungsbuchsen 18 und 19 durchgeführt. Die Führungsbuchse 18 umgibt den Kreiskolben 1o und ist an einem Ende des Zylindergehäuses 11 stirnseitig in dieses eingesteckt. Ihr Innendurchmesser entsprichtdem Außendurchmesser des Kreiskolbens 1o, während ihr Außendurchmesser dem Innendurchmesser des Zylindergehäuses 11 entspricht. Die Führungsbuchse 18 ist mit Hilfe einer Stiftschraube 2o in dem Zylindergehäuse 11 befestigt und mit Hilfe eines Dichtungsringes 21 gegenüber dem Kreiskolben 1o abgedichtet.

Entsprechend ist am anderen Ende des Zylindergehäuses 11 die Führungsbuchse 19 stirnseitig eingesteckt und dort mit einer Stiftschraube 22 befestigt. Diese Führungsbuchse 19 umgibt das Luftzufuhrrohr 15, ihr innerer Durchmesser entspricht dem äußeren Durchmesser des Luftzufuhrrohres 15, während ihr äußerer Druchmesser dem inneren Durchmesser des Zylindergehäuses 11 entspricht. Mit Hilfe von Dichtungsringen 23 und 24 ist die Führungsbuchse 19 abgedichtet.

- 6 -

Innerhalb des Zylindergehäuses 11 ist im Verbindungsbereich von Kreiskolben 1o und Luftzufuhrrohr 15 eine Kolbenmanschette 25 angeordnet, welche an der inneren Oberfläche des Zylindergehäuses 11 dicht anliegt und somit das Zylindergehäuse 11 in zwei getrennte Druckräume unterteilt. Diese Kolbenmanschette kann aus einem flexiblen Kunststoff bestehen, so daß sie sich unter der Wirkung von Druckluft diehtend an die innere Oberfläche des Zylindergehäuses 11 anlegt. Mit einem inneren Ringsteg 26 ist die Kolbenmanschette 25 zwischen einem an einer Seite anliegenden Ansatzstück 27 des Kreiskolbens 1o und einem an der anderen Seite anliegenden Klemmring 28 festgeklemmt, der an dem Luftzufuhrrohr 15 ausgebildet ist. Durch Einschrauben des Außengewindes 29, daß am Ende des Luftzufuhrrohres 15 ausgebildet ist, in das Ansatzstück 27 wird das die Kolbenmanschette festgeklemmt.

Im zusammengebauten Zustand bilden der Kreiskolben 1o, als Gehäuse mit innerem Rotor od. dgl. die Kolbenmanschette 25 und das Luftzufuhrrohr 15 eine bauliche Einheit, die innerhalb des Zylindergehäuses 11 axial verschoben werden kann. Solche Verschiebungen lassen sich mit Druckluft durchführen, die wahlweise auf eine Seite der Kolbenmanschette 25 oder auf die andere Seite geleitet wird. Zu diesem Zweck sind in dem Zylindergehäuse 11 an den beiden Enden Luftdurchtrittsöffnungen 3o und 31 angebracht. Die Luftdurchtrittsöffnung 3o verbindet den von dem Kreiskolben 1o beaufschlagten Hohlraum des Zylindergehäuses 11 nach außen, während die Luftdurchtrittsöffnung 31 den von dem Luftzufuhrrohr 15 beaufschlagten Hohlraum des Zylindergehäuses 11 nach außen verbindet. Aus der für den Antrieb

- 7 -

des Druckluftmotors zur Verfügung stehenden Druckluftquelle lassen sich somit auch die von der Kolbenmanschette 25 getrennten Hohlräume des Zylindergehäuses 11 wahlweise mit Druckluft beaufschlagen, so
daß die Kolbenmanschette 25 entweder ein Ausfahren
des Kreiskolbens 1o und des damit verbundenen Bohrers
14 oder ein Einfahren dieses Kolbens bewirkt. Wenn
keine Druckluft zu- oder abgeführt wird, wenn also
die Luftdurc-htrittsöffnungen 3o und 31 beide verschlossen sind, so kann die Kolbenmanschette 25 auch
in ihrer jeweiligen Stellung gehalten werden. Das dabei mehr oder weniger große Luftpolster in den Hohlräumen kann sich für den Bohrer als axiale Federung
günstig auswirken.

- 8 -

Patentansprüche

─────────────

1. Bohrmaschine mit einem die Bohrspindel antreibenden Druckluftmotor, dadurch gekennzeichnet, daß
das Gehäuse des Druckluftmotors als Kreiskolben
(1o) ausgebildet und in einem Zylindergehäuse (11)
axial verschiebbar gelagert ist.

2. Bohrmaschine nach Anspruch 1, dadurch gekennzeichnet,
daß an der in Bezug auf die Spindel (12) rückseitigen
Stirnseite des Kreiskolbens (1o) ein Luftzufuhrrohr
(15) koaxial angeordnet ist.

3. Bohrmaschine nach den Ansprüchen 1 und 2, dadurch gekennzeichnet, daß das Luftzufuhrrohr (15) an seinem
in dem Zylindergehäuse (11) befindlichen Ende ein
Außengewinde (29) aufweist, welches in ein Ansatzstück (27) des Kreiskolbens (1o) eingeschraubt ist.

4. Bohrmaschine nach den Ansprüchen 1 bis 3, dadurch gekennzeichnet, daß an der Verbindungsstelle von Kreiskolben (1o) und Luftzufuhrrohr (15) eine an der
inneren Oberfläche des Zylindergehäuses (11) dich anliegende und dessen Hohlraum unterteilende Kolbenmanschette (25) befestigt ist.

-9-

5. Bohrmaschine nach den Ansprüchen 1 bis 4, dadurch gekennzeichnet, daß die Kolbenmanschette (25) zwischen dem Ansatzstück (27) und einem an dem Luftzufuhrrohr (15) ausgebildeten Klemmring (28) festgeklemmt ist.

6. Bohrmaschine nach den Ansprüchen 1 bis 5, dadurch gekennzeichnet, daß im Zylindergehäuse (11) auf beiden Seiten der Kolbenmanschette (25) jeweils eine radiale Luftdurchtrittsöffnung (3o, 31) angeordnet ist.

7. Bohrmaschine nach den Ansprüchen 1 bis 6, dadurch gekennzeichnet, daß der Kreiskolben spindelseitig mit Austrittsöffnungen (17) für Abluft ausgestattet ist.

8. Bohrmaschine nach den Ansprüchen 1 bis 7, dadurch gekennzeichnet, daß das Zylindergehäuse (11) an seinen beiden Stirnseiten mit Führungsbuchsen (18,19) verschlossen ist.

9. Bohrmaschine nach den Ansprüchen 1 bis 8, dadurch gekennzeichnet, daß in der vorderen Führungsbuchse (18) der Kreiskolben (1o) zentral gelagert ist

1o. Bohrmaschine nach den Ansprüchen 1 bis 9, dadurch gekennzeichnet, daß in der hinteren Führungsbuchse (19) das Luftzufuhrrohr (15) zentral gelagert ist.

0027951

Fig.1

Fig.2

**Europäisches Patentamt**

**EUROPÄISCHER RECHERCHENBERICHT**

0027951

Nummer der Anmeldung

EP 80 10 6246.4

| Kategorie | Kennzeichnung des Dokuments mit Angabe, soweit erforderlich, der maßgeblichen Teile | betrifft Anspruch |
|---|---|---|
| | DE - B - 1 943 910 (ATLAS COPCO AB) <br> * Spalte 3, Zeile 60 bis Spalte 4, Zeile 31 * <br> -- | 1,2,9 |
| | DE - U - 1 889 682 (FRANKFURTER MA-SCHINENBAU AG VORM. POKORNY) & WITTEKIND) <br> * Seite 3, Zeile 17 bis Seite 4; Fig. 2 und 3 * <br> -- | 1,2,10 |
| | DE - A - 1 477 447 (INGERSOLL-RAND CO.) <br> * Seite 7, Zeile 22 bis Seite 8, Zeile 22 <br> -- | 1,6 |
| | US - A - 2 674 098 (J.L. TAYLOR) <br> * Spalte 2, Zeilen 3 bis 46 * <br> -- | 1,7 |
| | DE - A - 2 007 813 (VOLKSWAGENWERK AG) <br> * Anspruch 1; Seite 3, Zeilen 6 bis 24 * <br> -- | 1 |
| | US - A - 3 677 351 (U.M. GEISSLER) <br> * Ansprüche 1 und 3 * <br> -- | 1 |
| A | US - A - 3 773 117 (P.E. DUSSEL) <br> ---- | |

### EINSCHLÄGIGE DOKUMENTE

**KLASSIFIKATION DER ANMELDUNG (Int. Cl.³)**

B 23 B 47/08

**RECHERCHIERTE SACHGEBIETE (Int. Cl.³)**

B 23 B 45/04
B 23 B 47/00
B 23 Q 5/00
B 24 B 47/14

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 03-02-1981 | MARTIN |

EPA form 1503.1 06.78